(19) Europäisches Patentamt
European Patent Office
Office européen des brevets

(11) **EP 4 580 112 A1**

(12) **DEMANDE DE BREVET EUROPEEN**

(43) Date de publication:
**02.07.2025 Bulletin 2025/27**

(21) Numéro de dépôt: **24219733.3**

(22) Date de dépôt: **13.12.2024**

(51) Classification Internationale des Brevets (IPC):
**H04L 9/00** (2022.01)

(52) Classification Coopérative des Brevets (CPC):
**H04L 9/002;** H04L 2209/04; H04L 2209/12

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **27.12.2023 FR 2315344**

(71) Demandeur: **STMicroelectronics International N.V.**
**1228 Plan-les-Ouates, Geneva (CH)**

(72) Inventeurs:
• **BLANC, Pierre-Alexandre**
**1140 BRUXELLES (BE)**
• **PEETERS, Michael**
**1320 Tourinnes-la-Grosse (BE)**

(74) Mandataire: **Cabinet Beaumont**
**4, Place Robert Schuman**
**B.P. 1529**
**38025 Grenoble Cedex 1 (FR)**

(54) **TRANSPOSITION D'UNE MATRICE AVEC MASQUAGE**

(57) La présente description concerne un procédé (400), par un dispositif électronique, de transposition d'une matrice (Mat), chaque ligne de ladite matrice formant un premier vecteur m[i], le procédé comprenant les étapes successives suivantes :

(a) Obtenir des deuxièmes vecteurs x[i] en décalant par la droite chaque premier vecteur m[i] d'un pas correspondant au numéro de ladite ligne ;

(b) Générer un deuxième vecteur w en appliquant la formule suivante : $w = XOR_0^{n-1}(x[i])$, (c) Générer des troisièmes vecteurs z[i,l], l étant un entier variant de 0 à n-1, en appliquant la formule suivante pour chaque valeur de i :

$$z[i,l] = x[i] \,\&\, !ROTR(Vect^n, i+l),$$

(d) Générer un quatrième vecteur v[l], représentant une ligne de la transposée de la matrice A, en appliquant la formule suivante :

$$v[l] = ROTL(w \,xor\, XOR_1^n(z[i,l])),$$

dans lequel les étapes (c) et (d) sont répétées pour toutes les valeurs de l.

**Fig. 4**

**Description**

Domaine technique

La présente description concerne de façon générale les circuits et dispositifs électroniques, et, plus particulièrement, la mise en oeuvre, par un circuit ou un dispositif électronique, d'un procédé de transposition d'une matrice.

Technique antérieure

Dans le domaine du traitement et du chiffrement de données, il est courant d'utiliser des matrices et de leur appliquer différentes opérations.

Une opération couramment appliquée à une matrice est une opération de transposition, pendant laquelle les lignes et les colonnes de ladite matrice sont interverties.

Il serait souhaitable de pouvoir améliorer, au moins en partie, certains aspects des mises en oeuvre de procédé de transposition de matrice.

Résumé de l'invention

Il existe un besoin pour une mise en oeuvre d'un procédé de transposition de matrice plus efficace.

Il existe un besoin pour une mise en oeuvre d'un procédé de transposition de matrice plus sécurisée.

Il existe un besoin pour une mise en oeuvre d'un procédé de transposition de matrice prévoyant des opérations de masquage.

Il existe un besoin pour des circuits et dispositifs électroniques adaptés à mettre en oeuvre un tel procédé de transposition de matrice.

Un mode de réalisation pallie tout ou partie des inconvénients des procédés connus de mise en oeuvre d'une transposition de matrice.

Un mode de réalisation pallie tout ou partie des inconvénients des procédés connus de mise en oeuvre d'une transposition de matrice prévoyant des opérations de masquage.

Un mode de réalisation pallie tout ou partie des inconvénients des circuits et dispositifs électroniques connus adaptés à la mise en oeuvre d'une transposition de matrice.

Un mode de réalisation pallie tout ou partie des inconvénients des circuits et dispositifs électroniques connus adaptés à la mise en oeuvre d'une transposition de matrice prévoyant des opérations de masquage.

Un mode de réalisation prévoit un procédé, par un dispositif électronique, de transposition d'une matrice comprenant n lignes et n colonnes, chaque ligne de ladite matrice formant un premier vecteur m[i], i étant en entier variant de 0 à n-1, le procédé comprenant les étapes successives suivantes :

(a) Obtenir des deuxièmes vecteurs x[i] en décalant par la droite chaque premier vecteur m[i] d'un pas correspondant au numéro de ladite ligne ;

(b) Générer un deuxième vecteur w en appliquant la formule mathématique suivante :

[Math 1]

$$w = XOR_0^{n-1}(x[i]),$$

dans lequel la fonction $XOR_0^{n-1}$ correspond à l'application successive de la fonction logique OU EXCLUSIF à plusieurs données ;

(c) Générer des troisièmes vecteurs z[i,l], l étant un entier variant de 0 à n-1, en appliquant la formule mathématique suivante pour chaque valeur de i :

[Math 2]

$$z[i,l] = x[i] \, \& \, ! ROTR(Vect^n, i + l),$$

dans lequel :

- & représente la fonction logique ET ;
- ! représente la fonction logique permettant d'obtenir le complémentaire d'une donnée binaire ;

- *ROTR(Vect^n,i+l)* représente un vecteur unitaire dont tous les éléments sont égaux à zéro sauf l'élément de rang i+l qui est égal à un ; et

(d) Générer un quatrième vecteur v[l], représentant une ligne de la transposée de la matrice A, en appliquant la formule mathématique suivante :

$$[Math\ 3]$$
$$v[l] = ROTL(w\ xor\ XOR_1^n(z[i,l])),$$

dans lequel :

- ROTL représente une fonction de décalage par la gauche ;
- xor représente la fonction logique OU EXCLUSIF,

dans lequel les étapes (c) et (d) sont répétées pour toutes les valeurs de l.

Un autre mode de réalisation prévoit un dispositif électronique adapté à mettre en oeuvre un procédé de transposition d'une matrice comprenant n lignes et p colonnes, chaque ligne de ladite matrice formant un premier vecteur m[i], i étant en entier variant de 0 à n-1, le procédé comprenant les étapes successives suivantes :

(a) Obtenir des deuxièmes vecteurs x[i] en décalant par la droite chaque premier vecteur m[i] d'un pas correspondant au numéro de ladite ligne ;
(b) Générer un deuxième vecteur w en appliquant la formule mathématique suivante :

$$[Math\ 4]$$
$$w = XOR_0^{n-1}(x[i]),$$

dans lequel la fonction $XOR_0^{n-1}$ correspond à l'application successive de la fonction logique OU EXCLUSIF à plusieurs données ;
(c) Générer des troisièmes vecteurs z[i,l], l étant un entier variant de 0 à p-1, en appliquant la formule mathématique suivante pour chaque valeur de i :

$$[Math\ 5]$$
$$z[i,j] = x[i]\ \&\ !Vect(i,l),$$

dans lequel :

- & représente la fonction logique ET ;
- ! représente la fonction logique permettant d'obtenir le complémentaire d'une donnée binaire ;
- *ROTR(Vect^n,i+l)* représente un vecteur unitaire dont tous les éléments sont égaux à zéro sauf l'élément de rang i+l qui est égal à un ; et

(d) Générer un quatrième vecteur v[l], représentant une ligne de la transposée de la matrice A, en appliquant la formule mathématique suivante :

$$[Math\ 6]$$
$$v[l] = ROTL(w\ xor\ XOR_1^n(z[i,l])),$$

dans lequel :

- ROTL représente une fonction de décalage par la gauche ;
- xor représente la fonction logique OU EXCLUSIF,

dans lequel les étapes et sont répétées pour toutes les valeurs de l.

Selon un mode de réalisation, le procédé comprend, en outre, des opérations de masquage.

Selon un mode de réalisation, une opération de masquage est une opération de masquage par application de la fonction xor.

Selon un mode de réalisation, le procédé comprend, en outre, une étape de masquage des deuxièmes vecteurs x[i] mise en oeuvre pendant l'étape (c).

Selon un mode de réalisation, à l'étape (c) des troisièmes vecteurs masqués z'[i,l] sont générés en appliquant la formule mathématique suivante pour chaque valeur de i :

[Math 7]

$$z[i, l] = (x[i] \, xor \, r[l] \, ) \& \, ! Vect(i, l),$$

dans lequel r[l] est un masque.

Selon un mode de réalisation, le masque r[l] est généré de façon aléatoire.

Selon un mode de réalisation, les entiers n et p sont égaux.

Selon un mode de réalisation, l'entier n est compris entre 1 et 20.

Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

la figure 1 représente, très schématiquement et sous forme de blocs, un mode de réalisation d'un dispositif électronique adapté à mettre en oeuvre les modes de réalisation des figures 4 et 5 ;
la figure 2 représente, schématiquement, une opération de transposition d'une matrice ;
la figure 3 représente, très schématiquement et sous forme de bloc, une opération de masquage ;
la figure 4 représente un schéma bloc illustrant un premier mode de mise en oeuvre d'un procédé de transposition d'une matrice ; et
la figure 5 représente un schéma bloc illustrant un deuxième mode de mise en oeuvre d'un procédé de transposition d'une matrice.

Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

Les modes de réalisation décrits ci-après concernent la mise en oeuvre d'une transposition d'une matrice. Une opération de transposition d'une matrice est une opération pendant laquelle les lignes et les colonnes d'une matrice d'entrée sont interverties. Les modes de réalisation décrits ci-après concernent, en outre, la mise en oeuvre d'une opération de transposition prévoyant des opérations de masquages, et permettant donc de prendre en charge, de façon sécurisée, une matrice à transposer.

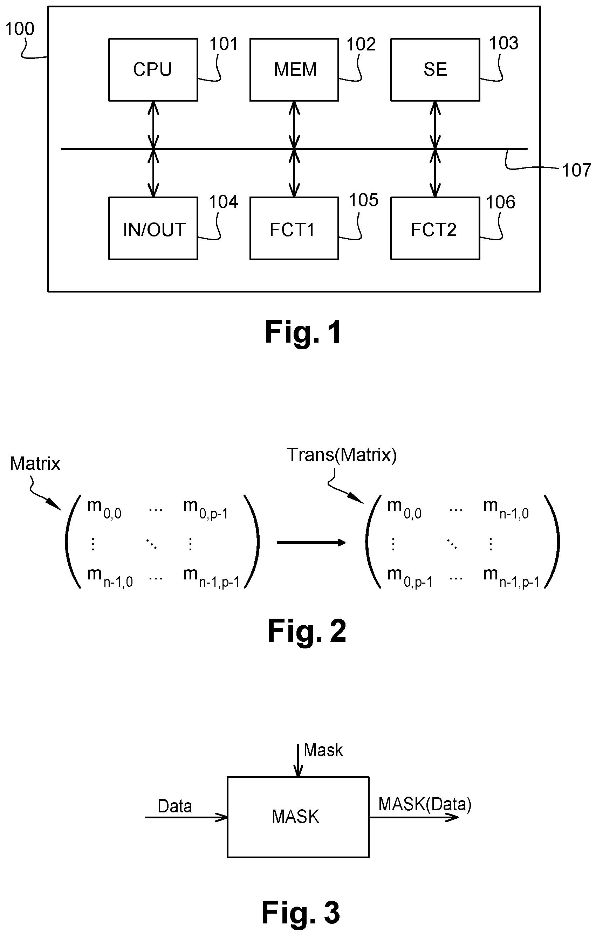

La figure 1 est un schéma bloc représentant, très schématiquement, une architecture d'un exemple d'un dispositif électronique 100 adapté à mettre en oeuvre un procédé de transposition d'une matrice.

Selon un exemple, le dispositif électronique 100 comprend un processeur 101 (CPU) adapté à mettre en oeuvre différents traitements de données stockées dans des mémoires et/ou fournies par d'autres circuits du dispositif 100. Selon un mode de réalisation, le processeur 101 est adapté à mettre en oeuvre un procédé de transposition d'une matrice. Selon un exemple, ledit processeur 101 comprend des registres et au moins une unité arithmétique adaptée à effectuer des opérations mathématiques à partir de données et/ou de vecteurs de données.

Selon un exemple, le dispositif électronique 100 comprend, en outre, différents types de mémoires 102 (MEM), parmi lesquelles, par exemple, une mémoire non volatile, une mémoire volatile 103, et/ou une mémoire morte 104. Chaque mémoire 102 est adaptée à stocker différents types de données.

Selon un exemple, le dispositif électronique 100 comprend, en outre, par exemple, un élément sécurisé 103 (SE) adapté à traiter des données sensibles et/ou secrètes. L'élément sécurisé 103 peut comprendre son ou ses propres processeurs, son ou ses propres mémoires, etc. Selon un mode de réalisation, l'élément sécurisé 101 est adapté à mettre en oeuvre un procédé de transposition d'une matrice.

Selon un exemple, le dispositif électronique 100 peut comprendre, en outre, des circuits d'interface 104 (IN/OUT) adaptés à envoyer et/ou à recevoir des données provenant de l'extérieur du dispositif 100. Les circuits d'interface 104 peuvent être, en outre adaptés à mettre en oeuvre un affichage de données, par exemple, un écran d'affichage.

Selon un exemple, le dispositif électronique 100 comprend, en outre, différents circuits 105 (FCT1) et 106 (FCT2) adaptés à réaliser différentes fonctions. A titre d'exemple, les circuits 105 et 106 peuvent comprendre des circuits de mesure, des circuits de conversion de données, etc. Selon un mode de réalisation, les circuits 105 et 106 peuvent comprendre un circuit adapté à mettre en oeuvre un procédé de transposition d'une matrice.

Selon un exemple, le dispositif électronique 100 comprend, en outre, un ou plusieurs bus de données 107 adaptés à transférer des données entre ses différents composants.

Selon un mode de réalisation, chaque élément du dispositif électronique 100 adapté à mettre en oeuvre un procédé de transposition de matrice comprend des registres et au moins une unité arithmétique adaptée à effectuer des opérations mathématiques à partir de données et/ou de vecteurs de données.

Selon un exemple particulier, le dispositif électronique 100 est adapté à mettre en oeuvre des programmes informatiques, et en particulier un programme informatique permettant de mettre en oeuvre un procédé de transposition d'une matrice.

La figure 2 représente l'application d'une opération de transposition Trans à une Matrice Matrix.

La matrice Matrix est une matrice comprenant n lignes et p colonnes, n et p étant des entiers supérieurs ou égaux à un. Les éléments, ou coefficients, de la matrice Matrix sont notés $m_{i,j}$, i étant un entier variant de 0 à p-1, et j étant un entier variant de 0 à n-1. Selon un mode de réalisation préféré, les entiers n et p sont identiques. Selon un exemple, l'entier n est compris entre 1 et 20, par exemple est égal à 4, 6 ou 16, et l'entier p est compris entre 1 et 40, par exemple est égal à 32.

L'opération de transposition Trans permet de fournir une matrice Trans(Matrix) comprenant p lignes et n colonnes. Les éléments, ou coefficients, de la matrice Trans(Matrix) sont notés $m'_{j,i}$, et sont données par la formule mathématique suivante :

[Math 8]

$$m'_{j,i} = m_{i,j}$$

Autrement dit, l'opération de transposition Trans permet d'intervertir les lignes et les colonnes de la matrice Matrix. Dit encore autrement, un vecteur représentant une ligne d'éléments d'indice k de la matrice Matrix comprend les mêmes éléments qu'un vecteur représentant une colonne d'indice k d'éléments de la matrice Trans(Matrix), k étant un entier variant entre 1 et n ou p.

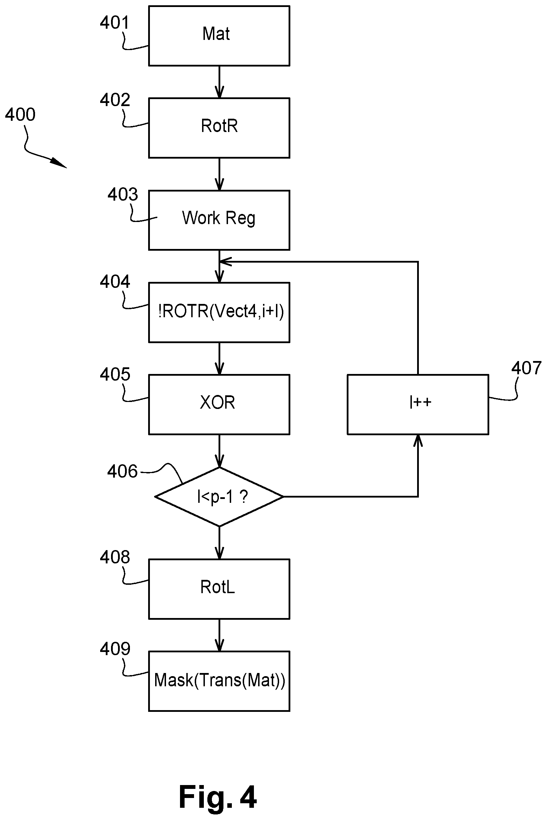

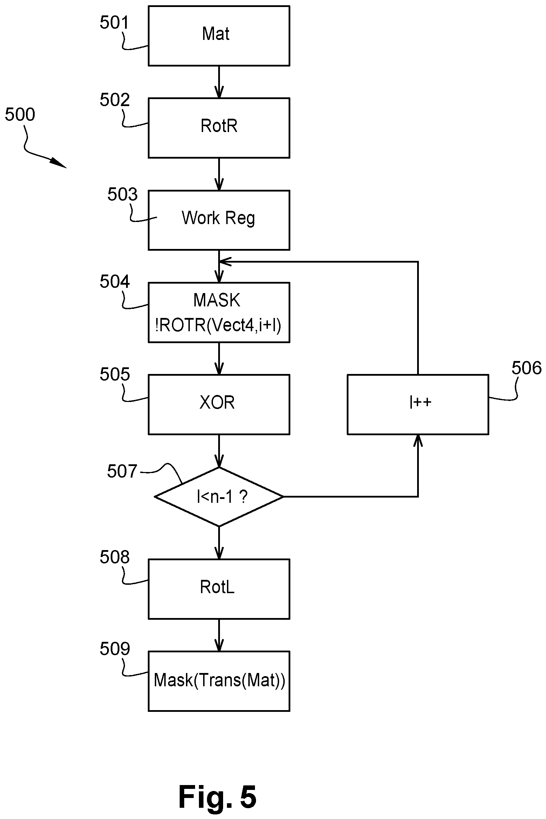

Les procédés décrits en relation avec les figures 4 et 5 illustrent des modes de mises en oeuvre pratiques d'une opération de transposition du type de l'opération de transposition Trans.

La figure 3 représente, très schématiquement et sous forme de bloc, une opération de masquage MASK d'une donnée Data par une donnée de masquage Mask.

Selon un mode de réalisation, la donnée Data est une donnée binaire représentant une donnée sensible ou secrète, c'est-à-dire une donnée dont le contenu ne doit pas être accessible à tous, et/ou dont l'accès du contenu est restreint à une entité ou à un groupe d'entités.

Selon un mode de réalisation, la donnée de masquage Mask, ou masque Mask, est une donnée utilisée pour masquer le contenu de la donnée Data. Il est courant d'utiliser des données générées de façon pseudo-aléatoire ou aléatoire comme masque Mask.

Il existe plusieurs types d'opération de masquage. L'opération de masquage MASK concernée ici est une opération de masquage utilisant la fonction logique OU EXCLUSIF (EXCLUSIVE OR, XOR), notée par la suite fonction xor.

Selon un mode de réalisation, l'application de l'opération de masquage MASK permet d'obtenir une donnée masquée MASK(Data). La donnée masquée MASK(Data) est donnée par la formule mathématique suivante :

[Math 9]

$$MASK(Data) = Data \; xor \; Mask$$

Une opération de démasquage de la donnée masquée correspond l'application, une nouvelle fois, de l'opération de masquage MASK. En effet :

[Math 10]

$$MASK\big(MASK(Data)\big) = (Data \; xor \; Mask) \; xor \; Mask = Data$$

La figure 5 concerne la mise en oeuvre d'un procédé de transposition d'une matrice dont les données sont masquées. L'application de l'opération de masquage à une matrice de données est détaillée en relation avec la figure 5.

La figure 4 est un schéma-bloc illustrant un mode de mise en oeuvre pratique d'un procédé 400 exécutant une opération de transposition d'une matrice du type de l'opération de transposition Trans décrite en relation avec la figure 2. Selon un mode de réalisation, ce procédé 400 peut être mis en oeuvre par le dispositif 100 décrit en relation avec la figure 1, et, plus particulièrement, par le processeur et/ou un des circuits composant le dispositif 100.

Pour illustrer le fonctionnement du procédé 400, il est considéré une matrice Mat de taille 4x4 donnée par la formule mathématique suivante :

[Math 11]

$$Mat = \begin{pmatrix} A & B & C & D \\ E & F & G & H \\ I & J & K & L \\ M & N & O & P \end{pmatrix}$$

dans laquelle les éléments A à P sont des données.

Le procédé 400 est aussi adapté à obtenir la transposée d'une matrice rectangulaire de taille n*p du type de la matrice Matrix décrite en relation avec la figure 2. Il suffit pour cela de diviser la matrice rectangulaire en plusieurs matrices carrées et d'appliquer le procédé 400 à chaque matrice carrée, ou de compléter la matrice rectangulaire avec des éléments vides pour obtenir des matrices carrées. Les capacités de la personne du métier sont suffisantes pour faire les adaptations nécessaires au vu des explications données ci-après. La mise en oeuvre du procédé 400 est détaillée en considérant par la suite seulement une matrice Matrix carrée où les entiers n et p sont égaux.

A une étape initiale 401 (Mat), et comme dit précédemment, on considère la matrice Mat dont les données sont stockées dans des registres sous forme de quatre vecteurs ligne m[0], m[1], m[2] et m[3] représentant chacun une ligne de la matrice Mat. Autrement dit, les vecteurs m[0] à m[3] sont données par la formule mathématique suivantes :

[Math 12]

$$\begin{cases} m[0] = (A, B, C, D) \\ m[1] = (E, F, G, H) \\ m[2] = (I, J, K, L) \\ m[3] = (M, N, O, P) \end{cases}$$

Dans le cas de la matrice Matrix décrite en relation avec la figure 2, les vecteurs m[i], i variant de 0 à n-1, sont donnés par la formule mathématique suivante :

[Math 13]

$$m[i] = (m_{i,0}, m_{i,1}, \dots, m_{i,n-1})$$

A une étape 402 (RotR), successive à l'étape 401, des vecteurs x[0], x[1], x[2] et x[3] sont générés à partir des vecteurs m0, m1, m2, et m3 et sont stockés dans des registres. Les vecteurs x[0] à x[3] sont donnés par les formules mathématiques suivantes qui sont appliquées par une unité arithmétique :

[Math 14]

$$\begin{cases} x[0] = ROTR(m[0], 0) = (A, B, C, D) \\ x[1] = ROTR(m[1], 1) = (H, E, F, G) \\ x[2] = ROTR(m[2], 2) = (K, L, I, J) \\ x[3] = ROTR(m[3], 3) = (N, O, P, M) \end{cases}$$

dans lesquelles ROTR représente une fonction de décalage des éléments d'un vecteur vers la droite, son premier argument correspondant au vecteur dont les éléments sont à décaler, et son deuxième argument correspondant au pas de décalage, c'est-à-dire à l'entier ajouté à l'indice de chaque élément, module le nombre d'éléments compris dans le vecteur.

Dans le cas de la matrice Matrix décrite en relation avec la figure 2, les vecteurs x[i], i variant de 0 à n-1, sont donnés par la formule mathématique suivante :

[Math 15]

$$x[i] = ROTR(m[i], i)$$

A une étape 403 (Work Reg), successive à l'étape 402, un vecteur de travail w est généré à partir des vecteurs x[0] à x[3] et stocké dans un registre. Le vecteur de travail w est donné par la formule mathématique suivante qui est appliquée par l'unité arithmétique :

[Math 16]

$$w = x[0] \; xor \; x[1] \; xor \; x[2] \; xor \; x[3]$$

Dans le cas de la matrice Matrix décrite en relation avec la figure 2, le vecteur de travail w est donné par la formule mathématique suivante :

[Math 17]

$$w = XOR_0^{n-1} x[i] = x[0] \; xor \; x[1] \; xor \dots xor \; x[n-1]$$

dans laquelle $XOR_0^{n-1}$ représente l'application successive de la fonction logique OU EXCLUSIF, ou fonction xor, à plusieurs données.

A une étape 404 (!Vect(i)), successive à l'étape 403, des vecteurs z[0,l], z[1,l], z[2,l] et z[3,l] sont générés à partir des vecteurs x[0], x[1], x[2], et x[3], j étant un entier variant entre 0 et n-1, et sont stockés dans des registres. Les vecteurs z[0,l] à z[3,l] sont donnés par les formules mathématiques suivantes qui sont appliquées par une unité arithmétique :

[Math 18]

$$\begin{cases} z[0, l] = x[0] \; \& \; ! \, ROTR(Vect^4, l) = (0, B, C, D) \\ z[1, l] = x[1] \; \& \; ! \, ROTR(Vect^4, 1 + l) = (H, 0, F, G) \\ z[2, l] = x[2] \; \& \; ! \, ROTR(Vect^4, 2 + l) = (K, L, 0, J) \\ z[3, l] = x[3] \; \& \; ! \, ROTR(Vect^4, 3 + l) = (N, O, P, 0) \end{cases}$$

Dans lesquelles :

- & représente la fonction logique ET ;
- ! représente la fonction logique permettant d'obtenir le complémentaire d'un mot binaire, autrement dit ! permet d'intervertir les éléments d'un vecteur représentant un un binaire et un zéro binaire ;
- $Vect^4$ est un vecteur unitaire de taille 4 dont le premier élément est égal à un, et les autres éléments sont égaux à zéro ;
- et l étant un entier variant de 0 à 3.

Plus particulièrement, on appelle ici un vecteur unitaire, un vecteur dont tous les éléments comprennent une donnée représentant un zéro binaire, sauf un élément qui comprend une donnée représentant un un binaire. En particulier, la fonction ROTR(Vect[4],i+l) permet de générer un vecteur unitaire de taille 4 et dont l'indice de l'élément comprenant une donnée représentant un un binaire est donné par le résultat de la somme des entiers i et l module 4.

Selon un mode de réalisation, lors de la première occurrence de l'étape 404, l'entier I est égal à zéro. Les conditions d'incrémentation de l'entier I sont décrites ci-après.

Dans le cas de la matrice Matrix décrite en relation avec la figure 2, les vecteurs z[i, l], i variant de 0 à n-1, sont donnés par la formule mathématique suivante :

[Math 19]

$$z[i,l] = x[i] \,\&\, !\, ROTR(Vect^n, i + l)$$

dans laquelle *Vect*[n] est un vecteur unitaire comprenant n éléments.

A une étape 405 (XOR), successive à l'étape 404, un vecteur y[l] est généré puis stocké dans un registre en utilisant la formule mathématique suivante qui est appliqué par une unité arithmétique :

[Math 20]

$$y[l] = w \; xor \; z[0,l] \; xor \; z[1,l] \; xor \; z[2,l] \; xor \; z[3,l]$$

Dans le cas où I est égal à zéro, y[0] est donnée par la formule mathématique suivante :

[Math 21]

$$y[0] = w \; xor \; z[0,0] \; xor \; z[1,0] \; xor \; z[2,0] \; xor \; z[3,0] = (A, E, I, M)$$

Dans le cas de la matrice Matrix décrite en relation avec la figure 2, le vecteur y[l] est donné par la formule mathématique suivante :

[Math 22]

$$y[l] = w \; xor \; XOR_0^{n-1} z[i,l] = \; w \; xor \; z[0,0] \; xor \; z[1,0] \; xor \; ... \; xor \; z[n-1,l]$$

A une étape 406 (l<n-1 ?), successive à l'étape 405, si la valeur de l'entier l utilisée à l'étape 405 est strictement inférieure à trois alors (sortie Y de l'étape 406) l'étape suivante est une étape 407 (l++), sinon (sortie N de l'étape 406) l'étape suivante est une étape 408 (RotL).

Dans le cas de la matrice Matrix de la figure 2, la valeur de l'entier l est comparée à n-1.

A l'étape 407, successive à l'étape 406, l'entier l est incrémenté de une unité, soit de un.

A l'étape 408, des vecteurs v[0], v[1], v[2] et v[3] sont générés à partir des vecteurs y[0], y[1], y[2], et y[3], et sont stockés dans des registres. Les vecteurs v[0] à v[3] sont donnés par les formules mathématiques suivantes qui sont appliquées par une unité arithmétique :

[Math 7]

$$\begin{cases} v[0] = ROTL(y[0], 0) = (A, E, I, M) \\ v[1] = ROTL(y[1], 1) = (B, F, J, N) \\ v[2] = ROTL(y[2], 2) = (C, G, K, O) \\ v[3] = ROTL(y[3], 3) = (D, H, L, P) \end{cases}$$

dans lesquelles ROTL représente une fonction de décalage des éléments d'un vecteur vers la gauche, son premier argument correspondant au vecteur dont les éléments sont à décaler, et son deuxième argument correspondant au pas de décalage, c'est-à-dire à l'entier ôté à l'indice de chaque élément module le nombre d'élément compris dans un vecteur.

Dans le cas de la matrice Matrix décrite en relation avec la figure 2, le vecteur v[i] est donné par la formule mathématique suivante :

[Math 23]

$$v[i] = ROTL(y[i], i)$$

A une étape finale 409 (Trans(Matrix)), successive à l'étape 408, tous les vecteurs v[0], v[1], v[2] et v[3] ont été générés et permettent d'obtenir la transposée Trans(Mat) de la matrice Mat. En effet, les vecteurs v[0], v[1], v[2] et v[3] représentent toutes les lignes de la transposée Trans(Mat).

Dans le cas de la matrice Matrix de la figure 2, les vecteurs v[i] forment les lignes de la matrice Matrix.

Un avantage de ce mode de mise en oeuvre est qu'il permet de réaliser une opération de transposition de matrice sans que les données de la matrice à transposer ne soit rendues accessibles. En effet, utiliser le vecteur de travail w permet de masquer les données lors de la mise en oeuvre du procédé 400.

La figure 5 est un schéma-bloc illustrant un autre mode de mise en oeuvre pratique d'un procédé 500 exécutant une opération de transposition d'une matrice du type de l'opération de transposition Trans décrite en relation avec la figure 2. Selon un mode de réalisation, ce procédé 500 peut être mis en oeuvre par le dispositif 100 décrit en relation avec la figure 1, et, plus particulièrement, par le processeur et/ou un des circuits composant le dispositif 100.

Le procédé 500 est similaire au procédé 400 décrit en relation avec la figure 4. En effet, le procédé 500 permet la mise en oeuvre d'une opération de transposition d'une matrice fournissant en sortie la transposée de la matrice masquée. Pour cela, le procédé comprend toutes les étapes du procédé 400, mais comprend, en outre, une étape de masquage détaillée ci-après.

Pour illustrer le fonctionnement du procédé 500, et comme pour le procédé 400, on considère à nouveau la matrice Mat de taille 4x4 donnée par la formule mathématique suivante :

[Math 24]

$$Mat = \begin{pmatrix} A & B & C & D \\ E & F & G & H \\ I & J & K & L \\ M & N & O & P \end{pmatrix}$$

Le procédé 500 est aussi adapté à obtenir la transposée d'une matrice rectangulaire de taille n*p du type de la matrice Matrix décrite en relation avec la figure 2. Il suffit pour cela de diviser la matrice rectangulaire en plusieurs matrices carrées et d'appliquer le procédé 400 à chaque matrice carrée, ou de compléter la matrice rectangulaire avec des éléments vides pour obtenir des matrices carrées. Les capacités de la personne du métier sont suffisantes pour faire les adaptations nécessaires au vu des explications données ci-après. La mise en oeuvre du procédé 400 est détaillée en considérant par la suite seulement une matrice Matrix carrée où les entiers n et p sont égaux.

A une étape initiale 501 (Mat), identique à l'étape 401 de la figure 4, les données de la matrice Mat sont stockées dans des registres sous forme des quatre vecteurs ligne m[0], m[1], m[2] et m[3] représentant chacun une ligne de la matrice Mat. Autrement dit, les vecteurs m[0] à m[3] sont données par les formules mathématiques suivantes qui sont appliquées par une unité arithmétique :

[Math 25]

$$\begin{cases} m[0] = (A, B, C, D) \\ m[1] = (E, F, G, H) \\ m[2] = (I, J, K, L) \\ m[3] = (M, N, O, P) \end{cases}$$

Dans le cas de la matrice Matrix décrite en relation avec la figure 2, les vecteurs m[i], i variant de 0 à n-1, sont donnés par la formule mathématique suivante :

[Math 26]

$$m[i] = (m_{i,0}, m_{i,1}, ..., m_{i,n-1})$$

A une étape 502 (RotR), identique à l'étape 402 et successive à l'étape 501, des vecteurs x[0], x[1], x[2] et x[3] sont générés à partir des vecteurs m0, m1, m2, et m3 et sont stockés dans des registres. Les vecteurs x[0] à x[3] sont donnés par les formules mathématiques suivantes qui sont appliquées par une unité arithmétique :

[Math 27]

$$\begin{cases} x[0] = ROTR(m[0], 0) = (A, B, C, D) \\ x[1] = ROTR(m[1], 1) = (H, E, F, G) \\ x[2] = ROTR(m[2], 2) = (K, L, I, J) \\ x[3] = ROTR(m[3], 3) = (N, O, P, M) \end{cases}$$

Dans le cas de la matrice Matrix décrite en relation avec la figure 2, les vecteurs x[i], i variant de 0 à n-1, sont donnés par la formule mathématique suivante :

[Math 28]

$$x[i] = ROTR(m[i], i)$$

A une étape 503 (Work Reg), identique à l'étape 403 et successive à l'étape 502, un vecteur de travail w est généré à partir des vecteurs x[0] à x[3] et est stocké dans un registre. Le vecteur de travail w est donné par la formule mathématique suivante qui sont appliquées par une unité arithmétique :

[Math 29]

$$w = x[0] \; xor \; x[1] \; xor \; x[2] \; xor \; x[3]$$

Dans le cas de la matrice Matrix décrite en relation avec la figure 2, le vecteur de travail w est donné par la formule mathématique suivante :

[Math 30]

$$w = XOR_0^{n-1} x[i] = x[0] \; xor \; x[1] \; xor \; ... \; xor \; x[n-1]$$

dans laquelle $XOR_0^{n-1}$ représente l'application successive de la fonction logique OU EXCLUSIF, ou fonction xor, à plusieurs données.

A une étape 504 (MASK !Vect(i)), successive à l'étape 503, des vecteurs z'[0,l], z'[1,l], z'[2,l] et z'[3,l] sont générés à partir des vecteurs x[0], x[1], x[2], et x[3], et à partir d'un masque r[l], l étant un entier variant de 0 à n-1, et sont stockés dans des registres. Les vecteurs z[0,l] à z[3,l] sont donnés par les formules mathématiques suivantes qui sont appliquées par une unité arithmétique :

[Math 31]

$$\begin{cases} z'[0, l] = (x[0] \; xor \; r[l]) \; \& \; ! \; ROTR(Vect^4, l) = (0, B, C, D) \\ z'[1, l] = (x[1] \; xor \; r[l]) \& \; ! \; ROTR(Vect^4, 1 + l) = (H, 0, F, G) \\ z'[2, l] = (x[2] xor \; r[l]) \; \& \; ! \; ROTR(Vect^4, 2 + l) = (K, L, 0, J) \\ z'[3, l] = (x[3] xor \; r[l]) \; \& \; ! \; ROTR(Vect^4, 3 + l) = (N, O, P, 0) \end{cases}$$

Selon un mode de réalisation, le masque r[l] est une donnée de masquage. Selon un exemple le masque r[l] est générée de façon aléatoire ou pseudo-aléatoire. Le masque r[l] est utilisé à l'étape 504 pour masquer les vecteurs x[0], x[1], x[2], et x[3].

Selon un mode de réalisation, lors de la première occurrence de l'étape 504, l'entier l est égal à zéro. Les conditions d'incrémentation de l'entier l sont décrites ci-après.

Dans le cas de la matrice Matrix décrite en relation avec la figure 2, les vecteurs z'[i, l], i variant de 0 à n-1, sont donnés par la formule mathématique suivante :

[Math 32]

$$z'[i,l] = (x[i] \; xor \; r[l]) \; \& \; ! \; ROTR(Vect^n, i+l)$$

A une étape 505 (XOR), successive à l'étape 504, un vecteur y'[l] est généré, et stocké dans un registre, en utilisant la formule mathématique suivante qui est appliquée par une unité arithmétique :

[Math 33]

$$y'[l] = w \; xor \; z'[0,l] \; xor \; z'[1,l] \; xor \; z'[2,l] \; xor \; z'[3,l]$$

Dans le cas où I est égal à zéro, y' [0] est donnée par la formule mathématique suivante :

[Math 34]

$$y'[0] = w \; xor \; z'[0,0] \; xor \; z'[1,0] \; xor \; z'[2,0] \; xor \; z'[3,0] = (A,E,I,M)$$

Dans le cas de la matrice Matrix décrite en relation avec la figure 2, le vecteur y'[l] est donné par la formule mathématique suivante :

[Math 35]

$$y'[l] = w \; xor \; XOR_0^{n-1} z'[i,l]$$

$$= w \; xor \; z'[0,0] \; xor \; z'[1,0] \; xor \dots xor \; z'[n-1,l]$$

A une étape 506 (I<n-1 ?), successive à l'étape 505, si la valeur de l'entier I utilisée à l'étape 505 est strictement inférieure à trois alors (sortie Y de l'étape 506) l'étape suivante est une étape 507 (j++), sinon (sortie N de l'étape 506) l'étape suivante est une étape 508 (RotL).

Dans le cas de la matrice Matrix de la figure 2, la valeur de l'entier I est comparée à n-1.

A l'étape 507, successive à l'étape 506, l'entier I est incrémenté de une unité, soit de un.

A l'étape 508, des vecteurs v'[0], v'[1], v'[2] et v'[3] sont générés à partir des vecteurs y'[0], y'[1], y'[2], et y'[3]. Les vecteurs v'[0] à v'[3] sont donnés par les formules mathématiques suivantes :

[Math 7]

$$\begin{cases} v'[0] = ROTL(y'[0],0) = (A,E,I,M) \\ v'[1] = ROTL(y'[1],1) = (B,F,J,N) \\ v'[2] = ROTL(y'[2],2) = (C,G,K,O) \\ v'[3] = ROTL(y'[3],3) = (D,H,L,P) \end{cases}$$

Dans le cas de la matrice Matrix décrite en relation avec la figure 2, le vecteur v'[i] est donné par la formule mathématique suivante :

[Math 36]

$$v'[i] = ROTL(y'[i],i)$$

A une étape finale 509 (Trans(Matrix)), successive à l'étape 508, tous les vecteurs v' [0], v' [1], v' [2] et v' [3] ont tous été générés et permettent d'obtenir la transposée Trans(Mat) de la matrice Mat dont les lignes ont toutes été masquées par un masque différent, les masques r[l]. En effet, les vecteurs v'[0], v'[1], v'[2] et v'[3] représentent toutes les lignes de la transposée Trans(Mat).

Dans le cas de la matrice Matrix de la figure 2, les vecteurs v'[i] forment les lignes de la matrice Matrix.

Un avantage de ce mode de mise en oeuvre est qu'il permet de réaliser une opération de transposition de matrice sans que les données de la matrice à transposer ne soit rendues accessibles. En effet, utiliser le vecteur de travail w permet de masquer les données lors de la mise en oeuvre du procédé 500.

Un autre avantage de ce mode de mise en oeuvre est qu'il permet de fournir une transposée de matrice masquée.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Enfin, la mise en oeuvre pratique des modes de réalisation et variantes décrits est à la portée de la personne du métier à partir des indications fonctionnelles données ci-dessus.

**Revendications**

1. Procédé (400 ; 500), par un dispositif électronique, de transposition d'une matrice (Mat) comprenant n lignes et n colonnes, chaque ligne de ladite matrice (Mat) formant un premier vecteur m[i], i étant en entier variant de 0 à n-1, le procédé comprenant les étapes successives suivantes :

   (a) Obtenir des deuxièmes vecteurs x[i] en décalant par la droite chaque premier vecteur m[i] d'un pas correspondant au numéro de ladite ligne ;
   (b) Générer un deuxième vecteur w en appliquant la formule mathématique suivante :

   [Math 37]

   $$w = XOR_0^{n-1}(x[i]),$$

   dans lequel la fonction $XOR_0^{n-1}$ correspond à l'application successive de la fonction logique OU EXCLUSIF à plusieurs données ;
   (c) Générer des troisièmes vecteurs z[i,l], l étant un entier variant de 0 à n-1, en appliquant la formule mathématique suivante pour chaque valeur de i :

   [Math 38]

   $$z[i, l] = x[i] \, \& \, ! \, ROTR(Vect^n, i + l),$$

   dans lequel :

      - & représente la fonction logique ET ;
      - ! représente la fonction logique permettant d'obtenir le complémentaire d'une donnée binaire ;
      - *ROTR*(*Vect^n*,*i+l*) représente un vecteur unitaire dont tous les éléments sont égaux à zéro sauf l'élément de rang i+l qui est égal à un ; et

   (d) Générer un quatrième vecteur v[l], représentant une ligne de la transposée de la matrice A, en appliquant la formule mathématique suivante :

   [Math 39]

   $$v[l] = ROTL(w \, xor \, XOR_1^n(z[i, l])),$$

   dans lequel :

      - ROTL représente une fonction de décalage par la gauche ;
      - xor représente la fonction logique OU EXCLUSIF,

   dans lequel les étapes (c) et (d) sont répétées pour toutes les valeurs de l.

2. Dispositif électronique adapté à mettre en oeuvre un procédé (400 ; 500) de transposition d'une matrice (Mat) comprenant n lignes et p colonnes, chaque ligne de ladite matrice (Mat) formant un premier vecteur m[i], i étant en entier variant de 0 à n-1, le procédé comprenant les étapes successives suivantes :

(a) Obtenir des deuxièmes vecteurs x[i] en décalant par la droite chaque premier vecteur m[i] d'un pas correspondant au numéro de ladite ligne ;

(b) Générer un deuxième vecteur w en appliquant la formule mathématique suivante :

[Math 40]

$$w = XOR_0^{n-1}(x[i]),$$

dans lequel la fonction $XOR_0^{n-1}$ correspond à l'application successive de la fonction logique OU EXCLUSIF à plusieurs données ;

(c) Générer des troisièmes vecteurs z[i,l], l étant un entier variant de 0 à p-1, en appliquant la formule mathématique suivante pour chaque valeur de i :

[Math 41]

$$z[i,j] = x[i] \,\&\, !\, Vect(i,l),$$

dans lequel :

- & représente la fonction logique ET ;
- ! représente la fonction logique permettant d'obtenir le complémentaire d'une donnée binaire ;
- *ROTR*(*Vect^n*,*i*+*l*) représente un vecteur unitaire dont tous les éléments sont égaux à zéro sauf l'élément de rang i+l qui est égal à un ; et

(d) Générer un quatrième vecteur v[l], représentant une ligne de la transposée de la matrice A, en appliquant la formule mathématique suivante :

[Math 42]

$$v[l] = ROTL(w \; xor \; XOR_1^n(z[i,l])),$$

dans lequel :

- ROTL représente une fonction de décalage par la gauche ;
- xor représente la fonction logique OU EXCLUSIF,

dans lequel les étapes (c) et (d) sont répétées pour toutes les valeurs de l.

**3.** Procédé selon la revendication 1, ou dispositif selon la revendication 2, dans lequel le procédé comprend, en outre, des opérations de masquage.

**4.** Procédé ou dispositif selon la revendication 3, dans lequel une opération de masquage est une opération de masquage par application de la fonction xor.

**5.** Procédé ou dispositif selon la revendication 3 ou 4, dans lequel le procédé comprend, en outre, une étape (e) de masquage des deuxièmes vecteurs x[i] mise en oeuvre pendant l'étape (c).

**6.** Procédé ou dispositif selon la revendication 5, dans lequel à l'étape (c) des troisièmes vecteurs masqués z'[i,l] sont générés en appliquant la formule mathématique suivante pour chaque valeur de i :

[Math 43]

$$z[i,l] = (x[i] \; xor \; r[l]\,) \,\&\, !\, Vect(i,l),$$

dans lequel r[l] est un masque.

**7.** Procédé ou dispositif selon la revendication 6, dans lequel le masque r[l] est généré de façon aléatoire.

**8.** Procédé selon l'une quelconque des revendications 1, 3 à 7, ou dispositif selon l'une quelconque des revendications 2 à 7, dans lequel les entiers n et p sont égaux.

**9.** Procédé selon l'une quelconque des revendications 1, 3 à 8, ou dispositif selon l'une quelconque des revendications 2 à 8, dans lequel l'entier n est compris entre 1 et 20.

**Fig. 1**

**Fig. 2**

**Fig. 3**

**Fig. 4**

**Fig. 5**

Europäisches
Patentamt

European
Patent Office

Office européen
des brevets

## RAPPORT DE RECHERCHE EUROPEENNE

Numéro de la demande

EP 24 21 9733

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | CHOU TUNG ED - SHIVAKUMARA PALAIAHNAKOTE ET AL: "McBits Revisited", 25 août 2017 (2017-08-25), 20170825, PAGE(S) 213 - 231, XP047562040, | 1-5,8,9 | INV. H04L9/00 |
| A | * figure 2 * | 6,7 | |
| A | YEDIDYA HILEWITZ ET AL: "Performing Advanced Bit Manipulations Efficiently in General-Purpose Processors", COMPUTER ARITHMETIC, 2007. ARITH '07. 18TH IEEE SYMPOSIUM ON, IEEE, PI, 1 juin 2007 (2007-06-01), pages 251-260, XP031116347, ISBN: 978-0-7695-2854-0 * section 2 * | 1-9 | |

DOMAINES TECHNIQUES
RECHERCHES (IPC)

H04L

Le présent rapport a été établi pour toutes les revendications

| Lieu de la recherche | Date d'achèvement de la recherche | Examinateur |
|---|---|---|
| Munich | 20 décembre 2024 | Billet, Olivier |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
............................................................................................
& : membre de la même famille, document correspondant

EPO FORM 1503 03.82 (P04C02)